# EUROPÄISCHE PATENTSCHRIFT

(11) **EP 3 649 339 B1**
(45) Veröffentlichungstag und Bekanntmachung des Hinweises auf die Patenterteilung: **29.09.2021**
(21) Anmeldenummer: 18735188.7
(22) Anmeldetag: 11.06.2018
(51) Int. Cl.: F03B 11/08, E02B 8/02, E02B 5/08

(54) **ABWEISERELEMENT UND ABWEISEREINRICHTUNG**
DEFLECTOR ELEMENT AND DEVICE
ÉLÉMENT ET DISPOSITIF DÉFLECTEUR

(30) Priorität: 04.07.2017 DE 102017114919
(43) Veröffentlichungstag der Anmeldung: 13.05.2020
(73) Patentinhaber: E.Ray Europa GmbH, 64295 Darmstadt (DE)
(72) Erfinder: LEMKE, Sebastian, 64295 Darmstadt (DE)
(74) Vertreter: Habermann Intellectual Property Partnerschaft von Patentanwälten mbB
(86) Internationale Anmeldenummer: PCT/EP2018/065305
(87) Internationale Veröffentlichungsnummer: WO 2019/007633

(56) Entgegenhaltungen:
- FR-A1- 2 728 596
- FR-A5- 2 164 100
- KR-A- 20120 133 060
- KR-B1- 101 099 431

## Beschreibung

Die Erfindung betrifft ein Abweiserelement zur Verwendung Bei einer Abweisereinrichtung für ein in einem Gewässer angeordneten Wasserkraftwerk sowie eine Abweisereinrichtung mit mindestens zwei Abweiserelementen.

Solche Abweisereinrichtungen werden bei Wasserkraftwerken und insbesondere bei in fließenden Gewässern angeordneten Wasserkraftwerken dazu verwendet, von dem fließenden Gewässer transportiertes Treibgut vor dem Eintritt in das Wasserkraftwerk abzulenken und an dem Wasserkraftwerk vorbeizuleiten. Auf diese Weise können unter anderem Beschädigungen an Bestandteilen des Wasserkraftwerk, wie beispielsweise einer in dem strömenden Gewässer angeordneten Turbine des Wasserkraftwerks, durch das Treibgut wirkungsvoll vermieden werden.

Aus dem Stand der Technik ist es beispielsweise bekannt, als Abweisereinrichtung an einem Rahmen befestigte Stahlseile zu verwenden und die Abweisereinrichtung im Einlauf zu den weiteren Bestandteilen des Wasserkraftwerks anzuordnen. Aus dem Stand der Technik sind zudem Abweisereinrichtungen mit mehreren parallel zueinander ausgerichteten rundstab- oder flachstabförmigen Abweiserelementen bekannt. Dabei werden üblicherweise zwei Abweisereinrichtungen zu einer Abweiservorrichtung zusammengestellt, wobei die Abweiservorrichtung eine Art Bug des Wasserkraftwerks bildet. Zu diesem Zweck werden jeweils zwei Abweisereinrichtungen mit jeweils mehreren parallel zueinander ausgerichteten stabförmigen Abweiserelementen unter einem Winkel zueinander angeordnet, so dass die Abweisereinrichtungen einen dreiecksförmigen Querschnitt in der Strömungsrichtung des fließenden Gewässers aufweisen, wenn die Abweisereinrichtungen bzw. die aus den Abweisereinrichtungen gebildete Abweiservorrichtung bestimmungsgemäß in Strömungsrichtung vor dem Wasserkraftwerk in dem strömenden Gewässer angeordnet sind. Ein Bereich, in dem die beiden Abweisereinrichtungen aneinander anliegen, bildet eine Art Vordersteven des durch die Abweiservorrichtung gebildeten, wasserdurchlässigen Bugs des Wasserkraftwerks.

KR 2012 0133060 offenbart ein länglich ausgestaltetes Abweiserelement das zwei einander gegenüberliegende kreisbogenförmig ausgestaltete Längsseiten mit unterschiedlichen Kreisbogenradien aufweist, wobei die Kreisbogenmittelpunkte der Längsseiten in einer Querrichtung des Abweiserelements und einer Längsrichtung des Abweiserelements beabstandet zueinander angeordnet sind.

Die aus dem Stand der Technik bekannten Abweiserelemente und Abweisereinrichtungen weisen insbesondere bei einer bugförmigen Anordnung ungünstige Strömungseigenschaften auf. Zudem weisen die aus dem Stand der Technik bekannten Abweiserelemente und Abweisereinrichtungen ungünstige Selbstreinigungseigenschaften auf, dass heißt, das bei den bekannten Abweiserelementen und Abweisereinrichtungen sich häufig Treibgut verfängt, sodass sich die Strömungseigenschaften des Wasserkraftwerks und die Anströmung der Turbine mit zunehmender Verschmutzung verschlechtern.

Als Aufgabe der Erfindung wird es angesehen, ein Abweiserelement sowie eine Abweisereinrichtung bereitzustellen, die gute Strömungseigenschaften aufweisen und kostengünstig hergestellt werden können.

Diese Aufgabe wird erfindungsgemäß durch ein Abweiserelement erreicht, wobei das Abweiserelement länglich ausgestaltet ist und zwei einander gegenüberliegende kreisbogenförmig ausgestaltete Längsseiten aufweist, wobei die Längsseiten einen gleichen Kreisbogenradius aufweisen und wobei Kreisbogenmittelpunkte der Längsseiten in einer Querrichtung des Abweiserelements und einer Längsrichtung des Abweiserelements beabstandet zueinander angeordnet sind. Durch die Verwendung länglicher Abweiserelemente mit bogenförmigen Außenkonturen können insbesondere strömungsoptimierte bugförmige Abweiservorrichtungen hergestellt werden. Dadurch, dass die Kreisbogenmittelpunkte beabstandet zueinander angeordnet sind, weist das Abweiserelement eine Sichelform auf, wobei eine Breite des Abweiserelements von einem ersten Endabschnitt des Abweiserelements hin zu einem zweiten Endabschnitt des Abweiserelements kontinuierlich zunimmt. Durch eine geeignete Wahl der Lagen der beiden Kreisbogenmittelpunkte können die Abweiserelemente an die jeweilige Bauform und Baugröße der aus den Abweiserelementen hergestellten Abweisereinrichtung angepasst werden und kann die Abweisereinrichtung so strömungsoptimiert ausgestaltet werden. Dadurch, dass die Längsseiten den gleichen Kreisbogenradius aufweisen, können die erfindungsgemäßen Abweiserelemente besonders einfach und kostengünstig hergestellt werden. Vorteilhafterweise ist es zur Herstellung der Abweiserelemente vorgesehen, dass die Abweiserelemente aus Blech, vorteilhafterweise aus Aluminiumblech oder verzinktem Stahlblech oder Edelstahlblech, vorteilhafterweise mittels Laser geschnitten werden. Da die Längsseiten den gleichen Kreisbogenradius aufweisen, können aus einem Stahlblech mehrere gleichartige Abweiserelemente hergestellt werden, wobei zwischen zwei Abweiserelementen nahezu kein Materialverschnitt anfällt, da jeweils eine erste Längsseite eines ersten Abweiserelements eine zweite Längsseite eines aus dem Blech unmittelbar benachbart zu dem ersten Abweiserelement geschnittenen zweiten Abweiserelements bildet.

Durch die sichelförmige Ausgestaltung der Abweiserelemente können zudem Abweisereinrichtungen mit Selbstreinigungseigenschaften errichtet werden, die im Vergleich zur Verwendung der aus dem Stand der Technik bekannten Abweiserelementen bei gleicher Länge der verwendeten Abweiserelemente deutlich günstiger sind. Um gute Selbstreinigungseigenschaften zu erreichen, sollten die Abweiserelemente so angeordnet sein, dass das in der Strömung treibende Treibgut möglichst unter einem flachen Winkel auf die Abweiserelemente auftrifft. Daher sollten die Abweiserelemente und die Strömungsrichtung ebenfalls möglichst einen flachen Winkel zueinander aufweisen. Bei den aus dem Stand der Technik bekannten nicht sichelförmig ausgestalteten Abweiserelementen kann dies nur dadurch erreicht werden, dass Abweiserelemente geeigneter Länge verwendet werden und die Abweisereinrichtung bugförmig ausgestaltet wird. Durch die Verwendung der erfindungsgemäßen sichelförmigen Abweiserelemente kann daher eine Gesamtlänge des Wasserkraftwerks verringert werden und gleichzeitig ein ausreichender Abtrieb des Treibguts über Seitenflächen der Abweisereinrichtung erreicht werden.

Um das erfindungsgemäße Abweiserelement möglichst kostengünstig herstellen zu können, ist vorteilhafterweise vorgesehen, dass eine Kreisbogenlänge beider Längsseiten jeweils kürzer als ein halber Umfang eines Kreises ist, der denselben Radius wie die jeweilige Längsseite aufweist. Auf diese Weise können bei der Herstellung beispielsweise durch Schneiden aus einem Blech mehrere Abweiserelemente unmittelbar benachbart zueinander aus dem Blech geschnitten werden, wobei Längsseiten der benachbart zueinander aus dem Blech geschnittenen Abweiserelemente bei der Herstellung unmittelbar aneinander anliegen.

Vorteilhafterweise können die Abweiserelemente durch Pressen so umgeformt werden, dass eine ausreichende Verwindungssteifigkeit erreich wird. Bei einer im Wesentlichen waagerechten Ausrichtung der an einer an einem Wasserkraftwerk angeordneten Abweisereinrichtung montierten Abweiserelemente, sollten die Abweiserelemente vorteilhafterweise unter Zug an der Abweisereinrichtung montiert werden.

Vorteilhafterweise ist erfindungsgemäß vorgesehen, dass beide Längsseiten eine gleiche Länge aufweisen.

Bei einer besonders vorteilhaften Ausgestaltung des erfindungsgemäßen Abweiserelements ist vorgesehen, dass das Abweiserelement eine gleichmäßige Dicke aufweist. Auf diese Weise kann das Abweiserelement vorteilhafterweise einfach aus einem Blech hergestellt werden.

Erfindungsgemäß ist vorteilhafterweise vorgesehen, dass die Dicke des Abweiserelements zwischen 1 mm und 10 mm liegt, vorzugsweise zwischen 3 mm und 7 mm, und besonders vorzugsweise 5 mm beträgt. Vorteilhafterweise ist das Abweiserelement aus einem Stahlblech, einem verzinkten Stahlblech, einem Aluminiumblech oder einem Edelstahlblech gefertigt.

Bei einer besonders vorteilhaften Ausgestaltung des erfindungsgemäßen Abweiserelements ist vorgesehen, dass das Abweiserelement zwei einander gegenüberliegende ebene Seitenflächen aufweist. Bei Verwendung des erfindungsgemäßen Abweiserelements für eine Abweisereinrichtung sind vorteilhafterweise mehrere Abweiserelemente parallel zueinander ausgerichtet, wobei die ebenen Seitenflächen der Abweiserelemente vorteilhafterweise parallel zueinander ausgerichtet sind. Über die eben ausgestalteten Seitenflächen kann das Wasser des fließenden Gewässers besonders einfach hinwegströmen, ohne dass die Strömung übermäßig beeinflusst wird. Vorteilhafterweise sind Übergänge zwischen den Längsseiten und den Seitenflächen abgerundet ausgestaltet, um ein Verletzungsrisiko für Fische und Menschen zu reduzieren.

Vorteilhafterweise ist erfindungsgemäß vorgesehen, dass eine Breite des Abweiserelements von einem ersten Endabschnitt des Abweiserelements zu einem zweiten Endabschnitt des Abweiserelements stetig zunimmt. Die mit den Abweiserelementen hergestellte Abweisereinrichtung sollte jeweils so an dem Wasserkraftwerk angeordnet werden, dass die zweite Seite der Abweiserelemente in Strömungsrichtung hinter der ersten Seite der Abweiserelemente liegt. Auf diese Weise kann in dem Bereich der zweiten Seiten jeweils ein größerer Abstand außenliegender Längsseiten der Abweiserelemente zu weiteren Komponenten des Wasserkraftwerks erreicht werden, wodurch Treibgut von dem Wasserkraftwerk weggedrückt und an dem Wasserkraftwerk weiträumig vorbeiheführt werden kann.

Um mehrere Abweiserelemente einfach zu einer Abweisereinrichtung verbinden zu können, ist erfindungsgemäß vorgesehen, dass das Abweiserelement in dem ersten Endabschnitt und in dem zweiten Endabschnitt jeweils eine Bohrung in einer Dickenrichtung des Abweiserelements aufweist. In dieser Bohrung kann erfindungsgemäß vorteilhafterweise ein Verbindungsstab angeordnet werden, durch den mehrere gleichartige Abweiserelemente miteinander verbunden werden können.

Die Erfindung betrifft auch eine Abweisereinrichtung mit mindestens zwei wie voranstehend beschriebenen Abweiserelementen. Vorteilhafterweise ist erfindungsgemäß vorgesehen, dass Seitenflächen der Abweiserelemente in Dickenrichtung parallel verschoben zueinander ausgerichtet sind und beabstandet zueinander angeordnet sind.

Bei einer besonders vorteilhaften Ausgestaltung der erfindungsgemäßen Abweisereinrichtung ist vorgesehen, dass die Abweiserelemente an einem ersten und einem zweiten in fluchtend zueinander ausgerichteten ersten und zweiten Bohrungen angeordneten Verbindungsstab festgelegt sind. Die ersten und zweiten Bohrungen sind jeweils in einem ersten und einem zweiten Endbereich der Abweiserelemente angeordnet.

Vorteilhafterweise wird die Abweisereinrichtung an einer Einlaufseite des Wasserkraftwerks so angeordnet, dass sich die Abweiserelemente des Abweisereinrichtung von einem Wasseroberflächenbereich der Einlaufseite aus in Strömungsrichtung unterhalb des Wasserkraftwerks erstrecken. Hierbei sind die Seitenflächen der Abweiserelemente vorteilhafterweise im Wesentlichen senkrecht zur Wasseroberfläche ausgerichtet, wenn das Wasserkraftwerk bestimmungsgemäß in dem fließenden Gewässer angeordnet ist.

Vorteilhafterweise ist erfindungsgemäß vorgesehen, dass zwei wie voranstehend beschriebene Abweisereinrichtungen zu einer bugförmigen Abweiservorrichtung zusammengestellt sind, wobei die Abweisereinrichtungen vorteilhafterweise so ausgerichtet sind, dass die Abweiserelemente von eine Art Vordersteven des Bugs bildenden Spitze der Abweiservorrichtung eine zunehmende Breite aufweisen. Die Abweiservorrichtung ist vorteilhafterweise so an den weiteren Bestandteilen des Wasserkraftwerks angeordnet, dass die Abweiservorrichtung eine Art Bug des Wasserkraftwerks bildet, wobei die Seitenflächen der Abweiserelemente vorteilhafterweise parallel zur Wasseroberfläche ausgerichtet sind, wenn das Wasserkraftwerk bestimmungsgemäß in dem fließenden Gewässer angeordnet ist.

Weitere vorteilhafte Ausgestaltungen werden anhand von in der Zeichnung dargestellten Ausführungsbeispielen näher erläutert.

Es zeigt:
Figur 1 eine schematisch dargestellte Draufsicht auf ein erfindungsgemäßes Abweiserelement,
Figur 2 eine schematisch dargestellte Ansicht mehrerer aus einem Stahlblech geschnittener Abweiserelemente,
Figur 3 eine schematisch dargestellte Ansicht auf eine Unterseite eines Wasserkraftwerks mit einer Abweisereinrichtung und
Figur 4 eine schematisch dargestellte Ansicht auf eine Unterseite eines alternativ ausgestalteten Wasserkraftwerks.

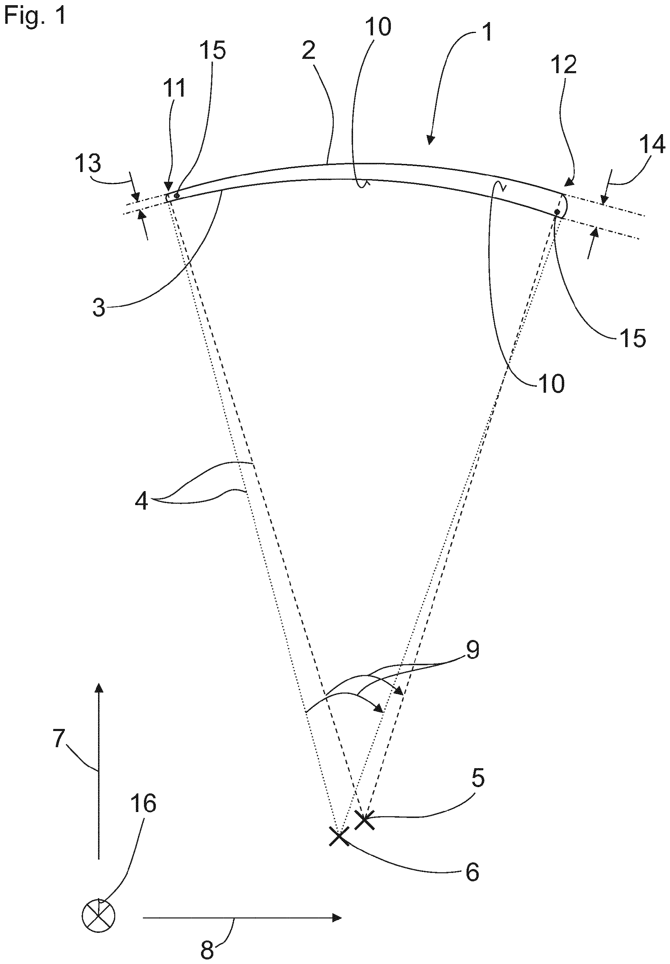

In Figur 1 ist schematisch ein Abweiserelement 1 dargestellt. Das Abweiserelement 1 ist länglich ausgestaltet und weist zwei einander gegenüberliegende kreisbogenförmig ausgestaltete Längsseiten 2, 3 auf. Kreisbogenradien 4 der Längsseiten 2, 3 sind identisch. Kreisbogenmittelpunkte 5, 6 der Längsseiten 2, 3 sind in einer Querrichtung 7 des Abweiserelements 1 und einer Längsrichtung 8 des Abweiserelements 1 beabstandet zueinander angeordnet. Die Längsseiten 2, 3 sind gleichlang ausgestaltet und weisen daher auch gleiche Mittelpunktswinkel 9 auf, die jeweils kleiner als 90° sind. Zudem weist das Abweiserelement 1 eine gleichmäßige Dicke auf. Einander gegenüberliegende Seitenflächen 10 des Abweiserelements 1 sind jeweils eben ausgestaltet.

Eine Breite des Abweiserelements 1 nimmt von einem ersten Endabschnitt 11 zu einem zweiten Endabschnitt 12 stetig zu und weist in dem ersten Endabschnitt 11 eine erste Endabschnittsbreite 13 und in dem zweiten Endabschnitt 12 eine zweite Endabschnittsbreite 14 auf. Zudem weist das Abweiserelement 1 in dem ersten Endabschnitt 11 und in dem zweiten Endabschnitt 12 jeweils eine Bohrung 15 in einer Dickenrichtung 16 des Abweiserelements 1 auf.

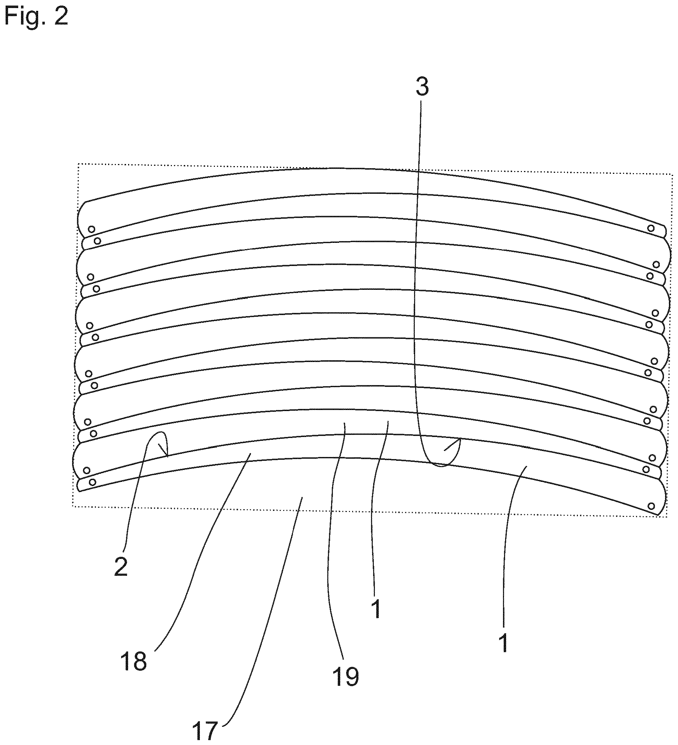

In Figur 2 sind schematisch mehrere aus einem Stahlblech 17 geschnittene Abweiserelemente 1 dargestellt, deren Form jeweils dem in Figur 1 dargestellten Abweiserelement 1 entsprechen. In Figur 2 sind nicht sämtliche sichtbaren Elemente des in Figur 1 dargestellten Abweiserelements 1 erneut mit einem Bezugszeichen gekennzeichnet.

Da die Längsseiten 2, 3 der Abweiserelemente 1 jeweils den gleichen Kreisbogenradius aufweisen, können aus dem Stahlblech 17 mehrere gleichartige Abweiserelemente 1 hergestellt werden, wobei zwischen zwei Abweiserelementen 1 nahezu kein Materialverschnitt anfällt, da jeweils eine erste Längsseite 2 eines ersten Abweiserelements 18 eine zweite Längsseite 2 eines aus dem Blech 14 unmittelbar benachbart zu dem ersten Abweiserelement 18 geschnittenen zweiten Abweiserelements 19 bildet. In der Darstellung der Figur 2 sind jeweils einzelne erste und zweite Abweiserelemente 18, 19 und erste und zweite Längsseiten 2, 3 exemplarisch mit einem Bezugszeichen gekennzeichnet.

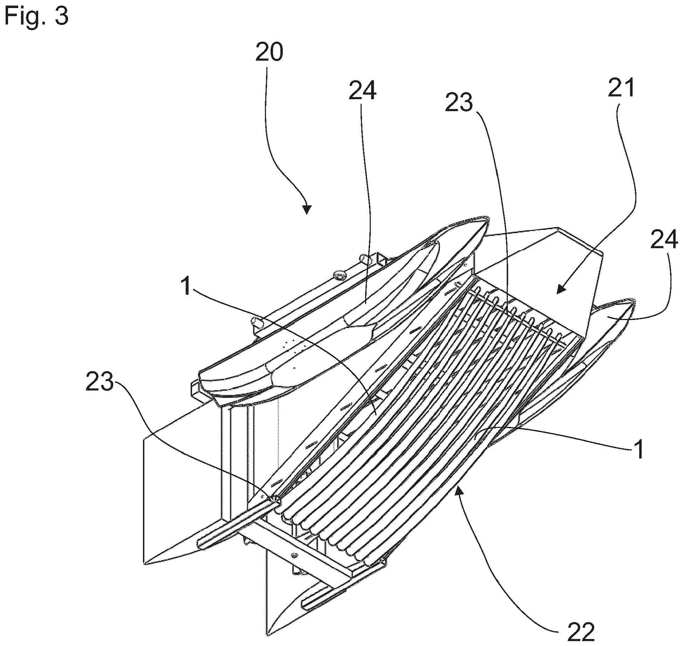

Figur 3 zeigt eine schematisch dargestellte Ansicht auf eine Unterseite eines schwimmenden Wasserkraftwerks 20. An einer Einlaufseite 21 des Wasserkraftwerks 20 ist eine Abweisereinrichtung 22 aus mehreren parallel zueinander ausgerichteten und über zwei Verbindungsstäbe 23 miteinander verbundenen Abweiserelementen 1 angeordnet. Der prinzipielle Aufbau Abweiserelemente 1 entspricht dem des in Figur 1 dargestellten Abweiserelements 1. In Figur 3 sind jedoch nicht sämtliche sichtbaren Elemente des in Figur 1 dargestellten Abweiserelements 1 erneut mit einem Bezugszeichen gekennzeichnet.

Das Wasserkraftwerk 20 ist dazu vorgesehen, schwimmend in einem fließenden Gewässer angeordnet zu werden und weist zu diesem Zweck zwei Schwimmkörper 24 auf. Das Wasserkraftwerk 20 wird dann von der Einlaufseite 21 her von Wasser durchströmt, wodurch eine nicht dargestellte Turbine des Wasserkraftwerks 20 angetrieben wird.

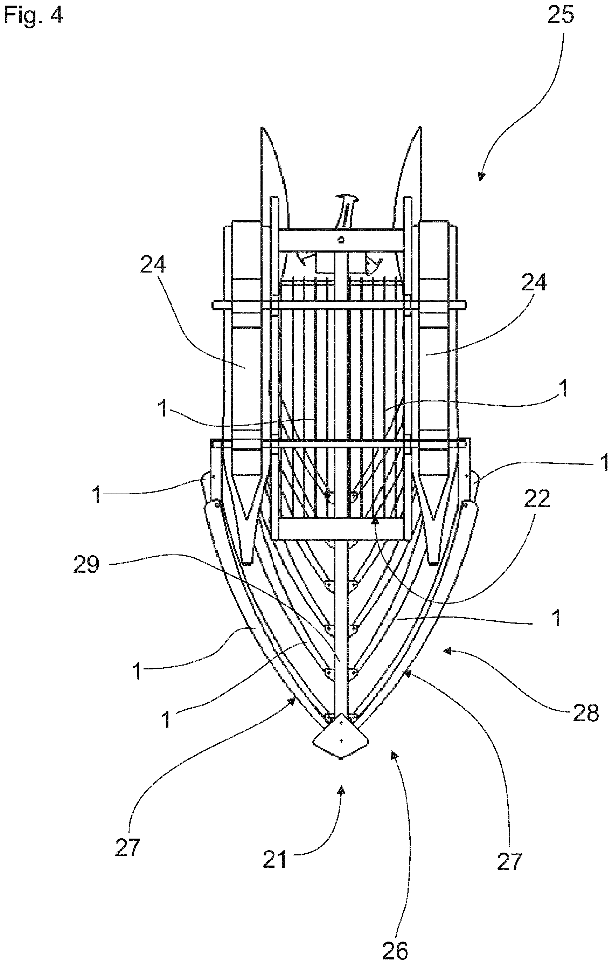

In Figur 4 ist eine Unterseite eines alternativ ausgestalteten Wasserkraftwerks 25 dargestellt. Das Wasserkraftwerk 25 weist eine Abweisereinrichtung 22 und zusätzlich zwei eine bugförmige Abweiservorrichtung 26 bildende Abweisereinrichtungen 27 auf. Die Abweisereinrichtung 22 entspricht der in Figur 3 dargestellten Abweisereinrichtung 22. In Figur 4 sind jedoch nicht sämtliche sichtbaren Elemente der in Figur 3 dargestellten Abweisereinrichtung 22 erneut mit einem Bezugszeichen gekennzeichnet.

Die Abweiservorrichtung 26 dient zusätzlich dazu, Treibgut seitlich an dem Wasserkraftwerk 25 vorbeizuleiten, sodass sich dieses nicht beispielsweise an den Schwimmkörpern 24 des Wasserkraftwerks 25 verfängt. Die Abweiservorrichtung 26 ist so an den weiteren Bestandteilen des Wasserkraftwerks 25 angeordnet, dass die Abweiservorrichtung 26 eine Art Bug 28 mit einem Vordersteven 29 des Wasserkraftwerks 25 bildet.

In den Darstellungen der Figuren 1 bis 4 sind jeweils einzelne mehrerer gleichartiger Elemente exemplarisch mit einem Bezugszeichen gekennzeichnet.

## Patentansprüche

1. Abweiserelement (1, 18, 19) zur Verwendung bei einer Abweisereinrichtung (22, 27) für ein in einem Gewässer angeordnetes Wasserkraftwerk (20, 25), wobei das Abweiserelement (1, 18, 19) länglich ausgestaltet ist und zwei einander gegenüberliegende kreisbogenförmig ausgestaltete Längsseiten (2, 3) aufweist, wobei die Längsseiten (2, 3) einen gleichen Kreisbogenradius (4) aufweisen und wobei Kreisbogenmittelpunkte (5, 6) der Längsseiten (2, 3) in einer Querrichtung (7) des Abweiserelements (1, 18, 19) und einer Längsrichtung (8) des Abweiserelements (1, 18, 19) beabstandet zueinander angeordnet sind.

2. Abweiserelement (1, 18, 19) gemäß Anspruch 1, **dadurch gekennzeichnet, dass** eine Kreisbogenlänge beider Längsseiten (2, 3) jeweils kürzer als ein halber Umfang eines Kreises ist, der denselben Radius wie die jeweilige Längsseite (2, 3) aufweist.

3. Abweiserelement (1, 18, 19) gemäß Anspruch 1 oder Anspruch 2, **dadurch gekennzeichnet, dass** beide Längsseiten (2, 3) eine gleiche Länge aufweisen.

4. Abweiserelement (1, 18, 19) gemäß einem der voranstehenden Ansprüche, **dadurch gekennzeichnet, dass** das Abweiserelement (1, 18, 19) eine gleichmäßige Dicke aufweist.

5. Abweiserelement (1, 18, 19) gemäß Anspruch 4, **dadurch gekennzeichnet, dass** die Dicke des Abweiserelements (1, 18, 19) zwischen 1mm und 10mm beträgt, vorzugsweise zwischen 3mm und 7mm beträgt und besonders vorzugsweise 5mm beträgt.

6. Abweiserelement (1, 18, 19) gemäß Anspruch 4 oder Anspruch 5, **dadurch gekennzeichnet, dass** das Abweiserelement (1, 18, 19) zwei einander gegenüberliegende ebene Seitenflächen (10) aufweist.

7. Abweiserelement (1, 18, 19) gemäß einem der voranstehenden Ansprüche, **dadurch gekennzeichnet, dass** eine Breite des Abweiserelements (1, 18, 19) von einem ersten Endabschnitt (11) des Abweiserelements (1, 18, 19) zu einem zweiten Endabschnitt (12) des Abweiserelements (1, 18, 19) stetig zunimmt.

8. Abweiserelement (1, 18, 19) gemäß einem der voranstehenden Ansprüche, **dadurch gekennzeichnet, dass** das Abweiserelement (1, 18, 19) in einem ersten Endabschnitt (11) und in einem zweiten Endabschnitt (12) jeweils eine Bohrung (15) in einer Dickenrichtung (16) des Abweiserelements (1, 18, 19) aufweist.

9. Abweisereinrichtung (22, 27) mit mindestens zwei Abweiserelementen (1, 18, 19) gemäß einem der voranstehenden Ansprüche, wobei Seitenflächen (10) der Abweiserelemente (1, 18, 19) in Dickenrichtung (16) parallelverschoben zueinander ausgerichtet sind und beabstandet zueinander angeordnet sind.

10. Abweisereinrichtung (22, 27) gemäß Anspruch 9, wobei die Abweiserelemente gemäß Anspruch 8 ausgestaltet sind und wobei die Abweiserelemente (1, 18, 19) an einem ersten und einem zweiten in fluchtend zueinander ausgerichteten ersten und zweiten Bohrungen (15) angeordneten Verbindungsstab (23) festgelegt sind.

## Claims

1. Deflector element (1, 18, 19) for use in a deflector device (22, 27) for a hydroelectric power plant (20, 25) arranged in a body of water, wherein the deflector element (1, 18, 19) is of elongate configuration and has two mutually opposite longitudinal sides (2, 3) of circular arcuate configuration, wherein the longitudinal sides (2, 3) have the same circular arc radius (4) and wherein circular arc centre points (5, 6) of the longitudinal sides (2, 3) are arranged spaced apart from one another in a transverse direction (7) of the deflector element (1, 18, 19) and in a longitudinal direction (8) of the deflector element (1, 18, 19).

2. Deflector element (1, 18, 19) according to claim 1, **characterised in that** a circular arc length of both longitudinal sides (2, 3) is in each case shorter than half the circumference of a circle that has the same radius as the respective longitudinal side (2, 3).

3. Deflector element (1, 18, 19) according to claim 1 or claim 2, **characterised in that** both longitudinal sides (2, 3) have the same length.

4. Deflector element (1, 18, 19) according to any one of the preceding claims, **characterised in that** the deflector element (1, 18, 19) has a uniform thickness.

5. Deflector element (1, 18, 19) according to claim 4, **characterised in that** the thickness of the deflector element (1, 18, 19) is between 1 mm and 10 mm, preferably between 3 mm and 7 mm, and particularly preferably is 5 mm.

6. Deflector element (1, 18, 19) according to claim 4 or claim 5, **characterised in that** the deflector element (1, 18, 19) has two mutually opposite planar side faces (10).

7. Deflector element (1, 18, 19) according to any one of the preceding claims, **characterised in that** a width of the deflector element (1, 18, 19) increases continuously from a first end portion (11) of the deflector element (1, 18, 19) to a second end portion (12) of the deflector element (1, 18, 19) .

8. Deflector element (1, 18, 19) according to any one of the preceding claims, **characterised in that** the deflector element (1, 18, 19) has in each of a first end portion (11) and a second end portion (12) a bore (15) in a thickness direction (16) of the deflector element (1, 18, 19).

9. Deflector device (22, 27) having at least two deflector elements (1, 18, 19) according to any one of the preceding claims, wherein side faces (10) of the deflector elements (1, 18, 19) are oriented displaced in parallel relative to one another in the thickness direction (16) and are arranged spaced apart from one another.

10. Deflector device (22, 27) according to claim 9, wherein the deflector elements are configured in accordance with claim 8, and wherein the deflector elements (1, 18, 19) are fixed to a first and a second connecting rod (23) arranged in first and second bores (15) oriented in alignment with one another.

## Revendications

1. Elément déflecteur (1, 18, 19) destiné à être utilisé dans un dispositif déflecteur (22, 27) pour une centrale hydroélectrique (20, 25) disposé sur un plan d'eau, dans lequel l'élément déflecteur (1, 18, 19) est configuré de manière allongée et présente deux côtés longitudinaux (2, 3) se faisant face l'un l'autre, configurés en forme d'arc de cercle, dans lequel les côtés longitudinaux (2, 3) présentent un rayon d'arc de cercle (4) identique et dans lequel des points centraux d'arc de cercle (5, 6) des côtés longitudinaux (2, 3) sont disposés de manière espacée les uns par rapport aux autres dans un sens transversal (7) de l'élément déflecteur (1, 18, 19) et dans un sens longitudinal (8) de l'élément déflecteur (1, 18, 19).

2. Elément déflecteur (1, 18, 19) selon la revendication 1, **caractérisé en ce qu'**une longueur d'arc de cercle des deux côtés longitudinaux (2, 3) est respectivement plus courte qu'une demi-périphérie d'un cercle, qui présente le même rayon que le côté longitudinal (2, 3) respectif.

3. Elément déflecteur (1, 18, 19) selon la revendication 1 ou la revendication 2, **caractérisé en ce que** les deux côtés longitudinaux (2, 3) présentent une longueur identique.

4. Elément déflecteur (1, 18, 19) selon l'une quelconque des revendications précédentes, **caractérisé en ce que** l'élément déflecteur (1, 18, 19) présente une épaisseur homogène.

5. Elément déflecteur (1, 18, 19) selon la revendication 4, **caractérisé en ce que** l'épaisseur de l'élément déflecteur (1, 18, 19) est comprise entre 1 mm et 10 mm, de préférence est comprise entre 3 mm et 7 mm et en particulier de préférence est de 5 mm.

6. Elément déflecteur (1, 18, 19) selon la revendication 4 ou la revendication 5, **caractérisé en ce que** l'élément déflecteur (1, 18, 19) présente deux faces latérales (10) opposées.

7. Elément déflecteur (1, 18, 19) selon l'une quelconque des revendications précédentes, **caractérisé en ce qu'**une largeur de l'élément déflecteur (1, 18, 19) augmente en permanence depuis une première section d'extrémité (11) de l'élément déflecteur (1, 18, 19) vers une deuxième section d'extrémité (12) de l'élément déflecteur (1, 18, 19).

8. Elément déflecteur (1, 18, 19) selon l'une quelconque des revendications précédentes, **caractérisé en ce que** l'élément déflecteur (1, 18, 19) présente dans une première section d'extrémité (11) et dans une deuxième section d'extrémité (12) respectivement un alésage (15) dans un sens d'épaisseur (16) de l'élément déflecteur (1, 18, 19).

9. Dispositif déflecteur (22, 27) avec au moins deux éléments déflecteurs (1, 18, 19) selon l'une quelconque des revendications précédentes, dans lequel des faces latérales (10) des éléments déflecteurs (1, 18, 19) sont orientées avec un décalage parallèle l'un par rapport à l'autre dans le sens d'épaisseur (16) et sont disposées de manière espacée les unes par rapport aux autres.

10. Dispositif déflecteur (22, 27) selon la revendication 9, dans lequel les éléments déflecteurs sont configurés selon la revendication 8 et dans lequel les éléments déflecteurs (1, 18, 19) sont fixés sur une première et une deuxième barre de liaison (23) disposées dans des premiers et deuxièmes alésages (15) orientés de manière alignée les uns par rapport aux autres.
